# EUROPÄISCHE PATENTSCHRIFT

(11) **EP 1 475 285 B1**
(45) Veröffentlichungstag und Bekanntmachung des Hinweises auf die Patenterteilung: **01.04.2009**
(21) Anmeldenummer: 04009177.9
(22) Anmeldetag: 17.04.2004
(51) Int. Cl.: B60S 1/04, F16B 21/18, B60S 1/34

(54) **Lagerung einer Welle an einem Fahrzeug**
Shaft bearing in a motor vehicle
Support d'un arbre à bord d'un véhicule

(30) Priorität: 09.05.2003 DE 10320933
(43) Veröffentlichungstag der Anmeldung: 10.11.2004
(73) Patentinhaber: Volkswagen Aktiengesellschaft, 38436 Wolfsburg (DE)
(72) Erfinder: Misczyk, Hubertus, 38518 Gifhorn (DE)

(56) Entgegenhaltungen:
- EP-A- 0 806 329
- EP-A- 0 958 976
- EP-A- 1 074 442
- DE-U- 20 205 771

## Beschreibung

Die Erfindung betrifft eine aufprallweiche Lagerung einer Scheibenwischerwelle an einem Fahrzeug, die unter normalen Betriebsbedingungen in ihrer axialen Richtung im wesentlichen unbelastet ist und im Falle eines Aufpralls ein erhebliches Verletzungsrisiko für einen Aufprallbeteiligten darstellt.

Im Zusammenhang mit steigenden Sicherheitsanforderungen für Fahrzeuge wird dem Schutz von Unfallbeteiligten, wie Fußgängern, Radfahrern oder Inline-Skatern, bei einem Aufprall verstärkt Aufmerksamkeit geschenkt, und es werden Maßnahmen getroffen, die das Verletzungsrisiko eines Unfallbeteiligten senken. Einige an einer Fahrzeugkarosserie notwendigen Einrichtungen sind an dieser so angeordnet, dass diese bei einem Aufprall ein erhöhtes Verletzungsrisiko für den Unfallbeteiligten darstellen, insbesondere Antennen oder Scheibenwischeranlagen. Letztere weisen üblicherweise eine nach außen vorstehende Scheibenwischerwelle für den jeweiligen Scheibenwischer im Bereich des Wasserkastens an der Fahrzeugkarosserie auf. In der Regel ist eine solche Scheibenwischerwelle an einem mit der Fahrzeugkarosserie fest verbundenen Lagerkörper mit einem Sprengring gehaltert, der in eine an der Welle ausgebildete Umfangsnut eingreift und die Scheibenwischerwelle in axialer Wellenrichtung fixiert.

Zur Verringerung des Verletzungsrisikos ist es bereits bekannt, die jeweilige Scheibenwischerwelle dabei so zu lagern, dass diese bei einer unfallbedingten Stoßbelastung durch einen Aufprall des jeweiligen Aufprallbeteiligten in axialer Wellenrichtung nachgibt und in ihrer Lagerung axial verschoben wird. Diese Maßnahme führt zu einer Verringerung der Verletzungsgefahr beim Aufprallen des Kopfes oder von Gliedmaßen des Aufprallbeteiligten auf einen Scheibenwischer.

In der EP 0 806 329 A2 ist eine solche aufprallweiche Lagerung einer im Normalbetrieb axial im wesentlichen unbelasteten Scheibenwischerwelle zur Verringerung des Verletzungsrisikos beschrieben, die durch eine beim Aufprall auf diese ausgeübte Stoßbelastung in im Wesentlichen axialer Richtung zum Fahrzeuginnern hin verschoben wird. Die Lagerung weist eine an einem fahrzeugfesten Lagerkörper mit einer zylindrischen Aufnahme für die Scheibenwischerwelle, einen an dessen dem Fahrzeuginneren abgewandter Stirnseite abgestützten Sprengring, der über seinen Umfang an einer Stelle unterbrochen ist und mit dem die Scheibenwischerwelle in axialer Richtung in Eingriff steht, und einen zur Anlage am Sprengring auf der dem Legerkörper abgewandten Seite an der Scheibenwischerwelle ausgebildeten Wellenabsatz auf. Der Sprengring ist mit einer sich in axialer Richtung verjüngenden oder erweiternden konischen Fläche versehen und korrespondiert mit dieser mit einer an der Scheibenwischerwelle oder dem Lagerkörper ausgebildeten konischen Fläche.

Bei einer plötzlich auftretenden axialer Stoßbelastung wird der Sprengring je nach Ausbildung der Anordnung infolge des jeweils zusammenwirkenden konischen Flächenpaares aufgeweitet oder zusammengedrückt, und die Scheibenwischerwelle wird in axialer Richtung durch den Sprengring oder mit diesem zusammen durch die Aufnahme gedrückt. Wird eine Scheibenwischerwelle an einem Scheibenwischer derartig gelagert, so wird das Verletzungsrisiko für einen auf den Scheibenwischer stoßenden Aufprallbeteiligten reduziert. Der Verschiebeweg der jeweiligen Scheibenwischerwelle und des an dieser angeordneten Scheibenwischers ist dabei durch die Aufnahme und die räumlichen Gegebenheiten unter der Fahrzeugkarosserie bestimmt. Die Lagerung ist aber wegen der Ausbildung der miteinander korrespondierenden Flächen einigermaßen aufwendig.

Es ist Aufgabe der Erfindung, eine aufprallweiche Lagerung einer Scheibenwischerwelle an einem Fahrzeug nach dem Oberbegriff des Anspruchs 1 aufwandsreduziert zu gestalten.

Diese Aufgabe wird bei einer aufprallweichen Lagerung nach dem Oberbegriff des Anspruchs 1 durch dessen kennzeichnenden Merkmale gelöst. Vorteilhafte Ausgestaltungen sind in den Unteransprüchen aufgeführt.

Die Erfindung besteht in einer aufprallweichen Lagerung einer Scheibenwischerwelle an einem Fahrzeug, die einen fahrzeugfesten Lagerkörper mit einer zylindrischen Aufnahme für die Scheibenwischerwelle, einen an dessen dem Fahrzeuginneren abgewandter Stirnseite abgestützten Sprengring sowie einen zur Anlage am Sprengring auf der dem Lagerkörper abgewandten Seite an der Scheibenwischerwelle ausgebildeten Wellenabsatz aufweist. Dabei sitzt der Sprengring am Wellenabsatz in einer an der Scheibenwischerwelle vorgesehenen Umfangsnut, wobei die senkrecht zur Wellenachse vorgesehene Nutwand die Anlagefläche für den Sprengring in Form einer konzentrischen Anlageschulter mit geringer radialer Erstreckung bildet und umfangsseitig zum Wellenbereich mit dem größeren Durchmesser hin eine Fase angeordnet ist, die direkt an der Anlageschulter angeschlossen ist.

Bei einer Stoßbelastung in im Wesentlichen axialer Richtung, insbesondere durch einen Aufprall eines Unfallbeteiligten, ermöglicht es diese Lagerung, dass die Scheibenwischerwelle mit der nur schmalen Anlageschulter unter Aufweiten des Sprengringes in diesen hineingedrückt und in dem Lagerkörper axial verschoben wird. Die angeschlossene Fase ermöglicht dann unter fortschreitender Aufweitung des Sprengringes ein weiteres Einschieben der Welle in den Lagerkörper unter Energieabbau. Die Lösung ist kostengünstig, da lediglich der mit dem Sprengring korrespondierende Wellenabsatz neuartig gestaltet ist. Die übrigen Teile der Anordnung, also der Sprengring und der Lagerkörper, sind unverändert. Daher ist die neuartige aufprallweiche Anordnung durch den Einsatz einer entsprechend gestalteten Scheibenwischerwelle realisierbar.

Es hat sich gezeigt, dass eine das Verletzungsrisiko deutlich reduzierende Nachgiebigkeit der Scheibenwischerwelle durch die bei einem Aufprall auf den Scheibenwischer aufgebrachte Aufprallenergie, die in bekannter Weise entsprechend einer idealen Beschleunigungs - Zeit - Kurve abgebaut werden soll, dadurch erreicht wird, dass die Anlageschulter im abgesetzten Bereich der Scheibenwischerwelle eine Breite von 0, 1 bis maximal 0, 3 mm, insbesondere jedoch von 0, 2 mm, hat und die Fase einen Winkel von 45 bis 15 Grad, insbesondere jedoch von 30 Grad, mit der Wellenachse einschließt. Die in den Grenzen liegenden Vorzugswerte beziehen sich dabei insbesondere auf eine Scheibenwischerwelle mit einem im abgesetzten Bereich gegebenen Kerndurchmesser von 10 bis 14 mm.

In einer bevorzugten Ausführung ist die aufprallweiche Anordnung so getroffen, dass der Lagerkörper mit einer Lagerbuchse versehen ist, die im Bereich des freien Endes des Lagerkörpers mit diesem und der Welle einen axialen Spalt ausbildet, in dem ein O-Ring zur radialen Abdichtung eingesetzt ist. Dieser Spalt wird durch eine auf der Stirnfläche des Lagerkörpers angeordnete Scheibe geschlossen, deren Innendurchmesser mit dem Außendurchmesser der Welle korrespondiert, wodurch auch eine Abdichtung in axialer Richtung gegeben ist. Auf der Scheibe ist der Sprengring angeordnet und greift in die in der Welle ausgebildete Umfangsnut ein, wobei dessen Innendurchmesser kleiner als der der Scheibe ist und dem Kerndurchmesser der Welle im Bereich der Nut entspricht.

Eine bevorzugte Ausführung wird nachstehend anhand von Zeichnungen erläutert. Es zeigen:
- Fig. 1:: die Lagerung einer im Normalbetrieb axial unbelasteten Scheibenwischerwelle in ei- nem Wischerwellenlager einer Scheibenwischeranlage eines Kraftfahrzeugs,
- Fig. 2:: die Lagerung der Scheibenwischerwelle am Lagerkörper und
- Fig. 3:: ein Kraft-Weg-Diagramm.

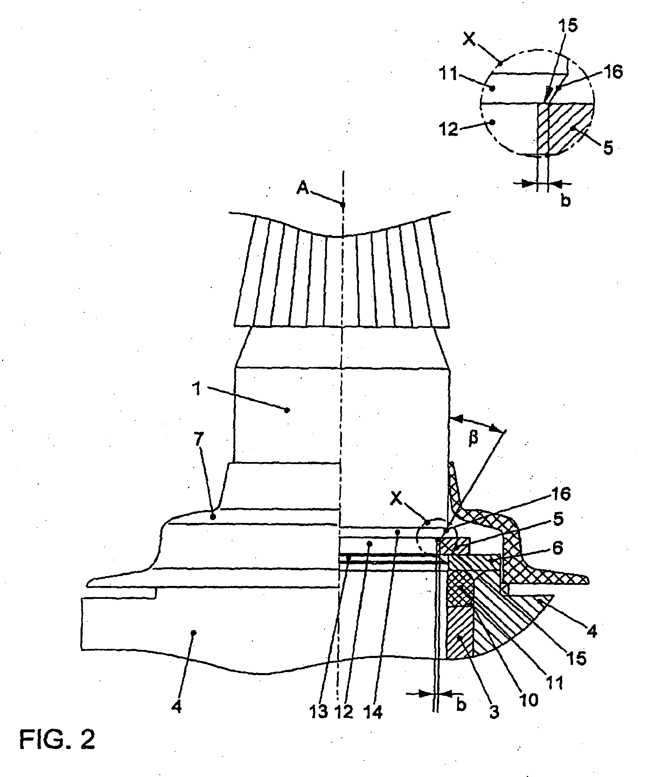

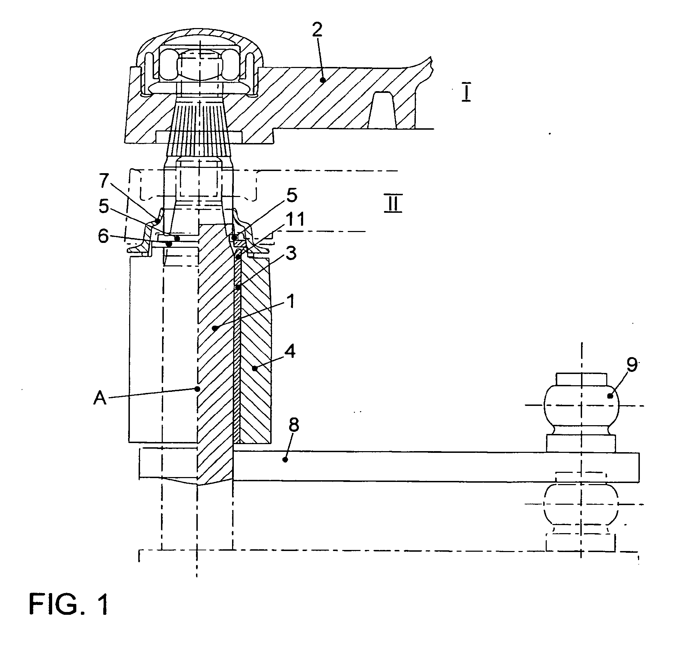

In Fig. 1 ist eine aufprallweiche Lagerung einer Scheibenwischerwelle 1 mit einem an dieser befestigten Wischerarm 2 einer Scheibenwischeranlage an einem Kraftfahrzeug dargestellt. Die Wischerwelle 1 ist in einem mit einer (Gleit-)Lagerbuchse 3 versehenen Lagerkörper 4 aufgenommen und durch einen radial geschlitzten Sprengring 5 gegen eine Bewegung in axialer Richtung gesichert, wobei sich der Sprengring 5 an einer an der Stirnfläche des Lagerkörpers 4 angeordneten Scheibe 6 abstützt. Die Anordnung ist von einer Abdeckkappe 7, die geschnitten dargestellt ist, umschlossen und somit vor Verschmutzung und Wasser geschützt. Die Anordnung ist in Fig. 2 vergrößert dargestellt und wird nachstehend erläutert. Die Wischerwelle 1 ist mit einem Schwinghebel 8 mit einem Kugelgelenkkopf 9 fest verbunden und wird durch diesen oszillierend angetrieben. Fig. 1 zeigt die Scheibenwischerwelle 1 mit dem Wischerarm 2 in der normalen Betriebsposition I in durchgezogenen und in einer Aufprallposition II in strich-punktierten Linien.

Der Lagerkörper 4 ist, wie Fig. 2 verdeutlicht zeigt, mit einer Lagerbuchse 3 versehen, auf der in einem zwischen diesen (3, 4) und der Scheibenwischerwelle 1 gebildeten Spalt 10 ein O-Ring 11 angeordnet ist. Dieser Spalt 10 ist durch die Scheibe 6 verschlossen, derart, dass der O-Ring 11 die Scheibenwischerwelle 1 gegenüber dem Lagerkörper 4 in radialer Richtung abdichtet, wobei die Scheibe 6 direkt aufliegt und deren Innendurchmesser mit dem Nenndurchmesser der Scheibenwischerwelle 1 korrespondiert. Daher ist der Spalt 10 auch in axialer Richtung abgedichtet.

Fig. 2 zeigt des Weiteren, dass die Scheibenwischerwelle 1 mit einer Umfangsnut 12 versehen ist, in die der auf der Scheibe 6 angeordnete Sprengring 5 eingreift und die Scheibe 6 leicht druckbeaufschlagt. Deren (12) lagerkörperseitige Begrenzungsfläche 13 ist gegenüber der Achse A der Scheibenwischerwelle 1 angeschrägt, wobei der durch diese gebildete Nutrand an der Innenfläche der Scheibe 6 anliegt. Die dem Lagerkörper 4 abgewandte Nutbegrenzungsfläche 14 weist eine am Nutgrund (verringerter Durchmesser = Kerndurchmesser) angeschlossene und senkrecht zur Achse A ausgebildete ringförmige Anlageschulter 15 mit einer Breite b von 0, 2 mm und im Anschluss an diese eine Fase 16 mit einem Winkel β von 30° auf. In die derartig gestaltete Umfangsnut 12 greift der Sprengring 5 derart ein, dass die Scheibenwischerwelle 1 mit der Anlageschulter 15 an diesem anliegt und dadurch in axialer Richtung auf den Lagerkörper 4 zu fixiert ist.

Wird nun der Wischerarm 2 mit einer Aufprallkraft stoßbeaufschlagt (Pfeil, Fig. 1), wird die schmale Anlageschulter 15 auf den Sprengring 5 gedrückt, der dadurch deformiert und unter Energieaufnahme aufgeweitet wird, und die Scheibenwischerwelle 1 gelangt mit der Fase 16 in den Sprengring 5, der dadurch unter Energieaufnahme verstärkt aufgeweitet wird, maximal bis zu einem natürlichen" Anschlag am Fahrzeug. Das Eindrücken der Scheibenwischerwelle 1 kann aber vorher beendet sein, nämlich dann, wenn die Aufprallenergie verbraucht ist.

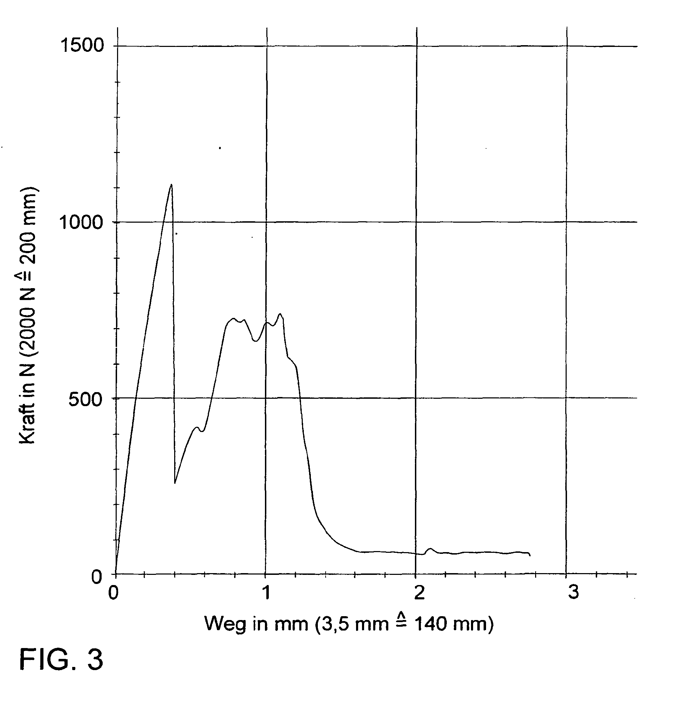

In dem vorgestellten Beispiel ergibt sich das in Fig. 3 dargestellte Kraft-Weg-Diagramm. Gegenüber einer Anordnung, bei der die Umfangsnut keine Anlageschulter mit einer angeschlossenen Fase ausbildet und bei der zum Eindrücken der Scheibenwischerwelle 1 eine Kraft von im Wesentlichen 4000 N erforderlich ist, wird lediglich eine Kraft von im wesentlichen 1100 N benötigt. Überdies ergibt sich eine hohe Anfangskraftspitze bei einem nur geringen Eindrückweg. Damit ist das Verletzungsrisiko für einen Unfallbeteiligten deutlich gesenkt.

### Bezugszeichenliste

- 1: Scheibenwischerwelle
- 2: Wischerarm
- 3: Lagerbuchse
- 4: Lagerkörper
- 5: Sprengring
- 6: Scheibe
- 7: Abdeckkappe
- 8: Schwinghebel
- 9: Kugelgelenkkopf
- 10: Spalt
- 11: O-Ring
- 12: Umfangsnut
- 13: Begrenzungsfläche
- 14: Nutbegrenzungsfläche
- 15: Anlageschulter
- 16: Fase
- A: Achse
- I: Betriebsposition
- II: Aufprallposition
- β: Winkel
- b: Breite

## Patentansprüche

1. Aufprallweiche Lagerung einer Scheibenwischerwelle an einem Fahrzeug, bei der die Scheibenwischerwelle (1) durch eine durch eine beim Aufprall auf diese ausgeübte Stoßbelastung in im Wesentlichen axialer Richtung zum Fahrzeuginneren hin verschoben wird, mit einem fahrzeugfesten Lagerkörper (4) mit einer zylindrischen Aufnahme für die Scheibenwischerwelle (1), einem an dessen dem Fahrzeuginneren abgewandter Stirnseite abgestützten Sprengring (5) und mit einem zur Anlage am Sprengring (5) auf der dem Lagerkörper (4) abgewandten Seite an der Scheibenwischerwelle (1) ausgebildeten Wellenabsatz (14), **dadurch gekennzeichnet, dass** der Sprengring (5) am Wellenabsatz (14) in einer an der Scheibenwischerwelle (1) vorgesehenen Umfangsnut (12) sitzt und die senkrecht zur Wellenachse (A) vorgesehene Nutwand die Anlagefläche des Sprengringes (5) in Form einer konzentrischen Anlageschulter (15) mit geringer radialer Erstreckung bildet und umfangsseitig zum Wellenbereich mit dem größeren Durchmesser hin eine Fase (16) angeordnet ist, die direkt an der Anlageschulter (15) angeschlossen ist.

2. Lagerung nach Anspruch 1, **dadurch gekennzeichnet, dass** die Anlageschulter(15) eine Breite (b) von im Wesentlichen 0, 1 bis 0, 3 mm hat.

3. Lagerung nach Anspruch 1, **dadurch gekennzeichnet, dass** die Fase (16) mit der Achse (A) der Scheibenwischerwelle (1) einen Winkel (β) von im Wesentlichen 45 bis 15 Grad, insbesondere jedoch einen Winkel β von 30 Grad, einschließt.

4. Lagerung nach Anspruch 1, **dadurch gekennzeichnet, dass** der Lagerkörper (4) mit einer Lagerbuchse (3) versehen ist, die sprengringseitig mit dem Lagerkörper (4) und der Scheibenwischerwelle (1) einen Spalt (10) zur Aufnahme eines O-Ringes (11) ausbildet, der die Scheibenwischerwelle (1) gegenüber dem Lagerkörper (4) in radialer Richtung abdichtet, dass der Spalt (10) sprengringseitig durch eine auf der Stirnfläche des Lagerkörpers (4) und auf dem O-Ring (11) liegende Scheibe (6) abgeschlossen und in radialer Richtung abgedichtet ist, und dass die Anordnung von einer Abdeckkappe (7) umschlossen ist.

## Claims

1. Impact-deformable bearing of a wiper shaft on a vehicle, in which the wiper shaft (1) is displaced by an impact loading, which is exerted thereon during the impact, in a substantially axial direction towards the vehicle interior, with a vehicle-mounted bearing body (4) having a cylindrical receptacle for the wiper shaft (1), a snap ring (5) which is supported on the end side of said bearing body, which side faces away from the vehicle interior, and with a shaft step (14) which is formed on the wiper shaft (1) for bearing against the snap ring (5) on the side facing away from the bearing body (4), **characterized in that** the snap ring (5) sits on the shaft step (14) in a circumferential groove (12) provided on the wiper shaft (1), and the groove wall, which is provided perpendicularly to the shaft axis (A), forms the bearing surface of the snap ring (5) in the form of a concentric bearing shoulder (15) having a small radial extent, and a bevel (16) which is connected directly to the bearing shoulder (15) is arranged on the circumferential side towards the shaft region with the larger diameter.

2. Bearing according to Claim 1, **characterized in that** the bearing shoulder (15) has a width (b) of essentially 0.1 to 0.3 mm.

3. Bearing according to Claim 1, **characterized in that** the bevel (16) encloses an angle (β) of essentially 45 to 15 degrees, but in particular an angle (β) of 30 degrees, with the axis (A) of the wiper shaft (1).

4. Bearing according to Claim 1, **characterized in that** the bearing body (4) is provided with a bearing bush (3) which, on the snap-ring side, together with the bearing body (4) and the wiper shaft (1) forms a gap (10) for receiving an O-ring (11) which seals the wiper shaft (1) in the radial direction in relation to the bearing body (4), **in that** the gap (10) on the snap-ring side is closed and sealed in the radial direction by a washer (6) lying on the end surface of the bearing body (4) and on the O-ring (11), and **in that** the arrangement is surrounded by a covering cap (7).

## Revendications

1. Support de palier souple en cas de collision pour un arbre d'essuie-glace sur un véhicule, dans lequel l'arbre d'essuie-glace (1) est déplacé par une contrainte de choc exercée en cas de collision sur celui-ci, dans la direction essentiellement axiale vers l'intérieur du véhicule, avec un corps de palier (4) fixé au véhicule, avec un logement cylindrique pour l'arbre d'essuie-glace (1), un jonc élastique (5) supporté sur son côté frontal opposé à l'intérieur du véhicule, et un gradin d'arbre (14) réalisé pour s'appliquer contre le jonc élastique (5) sur le côté opposé au corps de palier (4) sur l'arbre d'essuie-glace (1), **caractérisé en ce que** le jonc élastique (5) sur le gradin d'arbre (14) repose dans une rainure périphérique (12) prévue sur l'arbre d'essuie-glace (1) et la paroi de la rainure prévue perpendiculairement à l'axe de l'arbre (A) forme la surface d'appui du jonc élastique (5) en forme d'épaulement d'appui concentrique (15) de faible étendue radiale, et du côté périphérique vers la région de l'arbre ayant le plus grand diamètre est disposé un biseau (16) qui est directement raccordé à l'épaulement d'appui (15).

2. Support de palier selon la revendication 1, **caractérisé en ce que** l'épaulement d'appui (15) a une largeur (b) substantiellement de l'ordre de 0,1 à 0,3 mm.

3. Support de palier selon la revendication 1, **caractérisé en ce que** le biseau (16) forme avec l'axe (A) de l'arbre d'essuie-glace (1) un angle (β) substantiellement compris entre 45 et 15 degrés, en particulier toutefois un angle (β) de 30 degrés.

4. Support de palier selon la revendication 1, **caractérisé en ce que** le corps de palier (4) est pourvu d'une douille de palier (3) qui constitue du côté du jonc élastique avec le corps de palier (4) et l'arbre d'essuie-glace (1) une fente (10) pour recevoir un joint torique (11), qui réalise l'étanchéité de l'arbre d'essuie-glace (1) par rapport au corps de palier (4) dans la direction radiale, **en ce que** la fente (10) est fermée du côté du jonc élastique par une rondelle (6) située sur la surface frontale du corps de palier (4) et sur le joint torique (11) et est étanchée dans la direction radiale, et **en ce que** l'agencement est entouré par un capuchon de recouvrement (7).
